# EUROPEAN PATENT SPECIFICATION

(11) **EP 2 017 840 B1**
(45) Date of publication and mention of the grant of the patent: **01.05.2013**
(21) Application number: 08103103.1
(22) Date of filing: 28.03.2008
(51) Int. Cl.: G11B 20/10

(54) **Optical disk drive**
Optisches Plattenlaufwerk
Lecteur de disque optique

(30) Priority: 20.07.2007 JP 2007189669
(43) Date of publication of application: 21.01.2009
(73) Proprietor: Teac Corporation, Tama-shi, Tokyo 206-8530 (JP)
(72) Inventor: Yoshinari, Daisuke, Tokyo (JP)
(74) Representative: Lang, Christian

(56) References cited:
- EP-A- 0 823 816
- EP-A- 0 971 358
- EP-A- 1 037 211
- EP-A- 1 102 275
- EP-A- 1 265 243
- EP-A- 1 615 431
- EP-A- 1 736 882
- US-A1- 2001 051 954
- US-A1- 2003 193 859
- US-A1- 2004 213 030
- MICROSOFT SYSTEMS JOURNAL, vol. 4, no. 5, September 1989 (1989-09), page 1(13), XP002486501

## Description

### PRIORITY INFORMATION

This application claims priority to Japanese Patent Application No. 2007-189669 filed on July 20, 2007.

### BACKGROUND

### Technical Field

The present invention relates to an optical disk drive, and more particularly to recovery of a recording anomaly that arises when data are recorded in a write-once optical disk, such as a CD-R.

### Related Art

Various techniques have hitherto been proposed in connection with restoration or recovery performed when a recording anomaly, such as power shutdown, has arisen during data recording operation.

For instance, according to a technique described in JP 10-233987 A, when an anomaly in a file is detected, several usable clusters determined from a file size recorded in a directory are recognized as normal files and sequentially read from a starting FAT of the file in which the anomaly is determined. An end code is written after reading of the several usable clusters has been completed, whereupon end information is provided to an anomalous file not having end information, to thus recover the file.

According to a technique described in JP 2001-143439 A, when AV data are recorded, an address of a recording block where AV data are first recorded is previously recorded. When file management information is broken in the middle of recording of the AV data, anomalous AV data can be played back on the basis of an address of a starting recording block where anomalous AV data are recorded. Further, the address of the recording block of the AV data is registered in sequential file management information, and a non-contiguous point in the AV data is detected in accordance with a PCR (Program Clock Reference), and file end information is added, thereby enabling recovery of the AV data.

According to a technique described in JP 2004-62947 A, when a mounted optical disk is determined to be in an open session and when an unrecorded area is determined to be present in a final fragment, dummy data are additionally written into a deficiency in the final ECC of the final fragment and a dummy ECC block, and the session is closed. Thereby, even when unexpected power shutdown has arisen in the middle of recording of data, the session that was in the middle of recording operation is restored, thereby enabling recovery and additional writing operations.

According to a technique described in JP 2005-129217 A, custom-designed file system data (a recovery descriptor) is inserted at specified intervals into a user data field of a data stream. Even when recording of a stream is incomplete for reasons of a power failure and a file system is not updated, a file system is constructed on the basis of the recovery descriptor recorded in the user data field, thereby recovering the stream.

When an open session begins as a result of occurrence of an anomaly, such as power shutdown, in the middle of recording of data, recovery of data itself becomes possible by closing the session as described in JP 2004-62947 A. However, when an FAT is not recorded, basic file information about a recorded file, such as a filename and an extension, drops. The reason for this is that, in the case of a once-write optical disk, an FAT is created after completion of recording of data and that the thus-created FAT is recorded in a predetermined area. In the meantime, according to the technique for inserting custom-designed file system data (a recovery descriptor) at specified intervals into a user data filed of a data stream as described in connection with JP 2005-129217 A, the technique can be applied to solely a specific format such as that including a user data field defined in a data stream. The technique is incapable of being applied to a currently, widely used format, such as MP3.

### SUMMARY

The present invention provides a device that does not depend on a specific format and that can recover an anomaly and perform playback even when the anomaly arises during data recording operation.

The present invention is directed toward an optical disk drive comprising a unit for reserving an FAT area in a write-once optical disk; a unit for recording data in the write-once optical disk; a unit for recording recovery data in a head of the data before initiation of recording of the data; a unit for detecting that recording is interrupted before completion of recording of the data; and a unit that reads the recovery data, creates an FAT, and records the FAT into the FAT area when interruption is detected.

In an embodiment of the present invention, the recovery data include at least any of a filename and an extension of a data file to be recorded. The recovery data preferably have a length that is an integral multiple of 2048 bytes.

According to the present invention, an FAT can be easily created by use of recovery data. Further, data can be recovered by means of recording the thus-created FAT.

The invention will be more clearly comprehended by reference to the embodiment provided below. However, the embodiment is merely illustrative, and the scope of the invention is not limited to the embodiment.

### BRIEF DESCRIPTION OF THE DRAWINGS

A preferred embodiment of the present invention will be described in detail by reference to the following drawings, wherein:
FIG. 1 is a schematic diagram showing the entirety of a digital master recorder of an embodiment of the present invention;
FIG. 2 is a descriptive view of a format of the present embodiment;
FIG. 3 is a flowchart (part 1) of processing of the embodiment;
FIG. 4 is a flowchart (part 2) of processing of the embodiment; and
FIG. 5 is a descriptive view of recovery processing of the embodiment.

### DETAILED DESCRIPTION

An embodiment of the present invention will be described hereunder by reference to the drawings while taking a digital master recorder as an example.

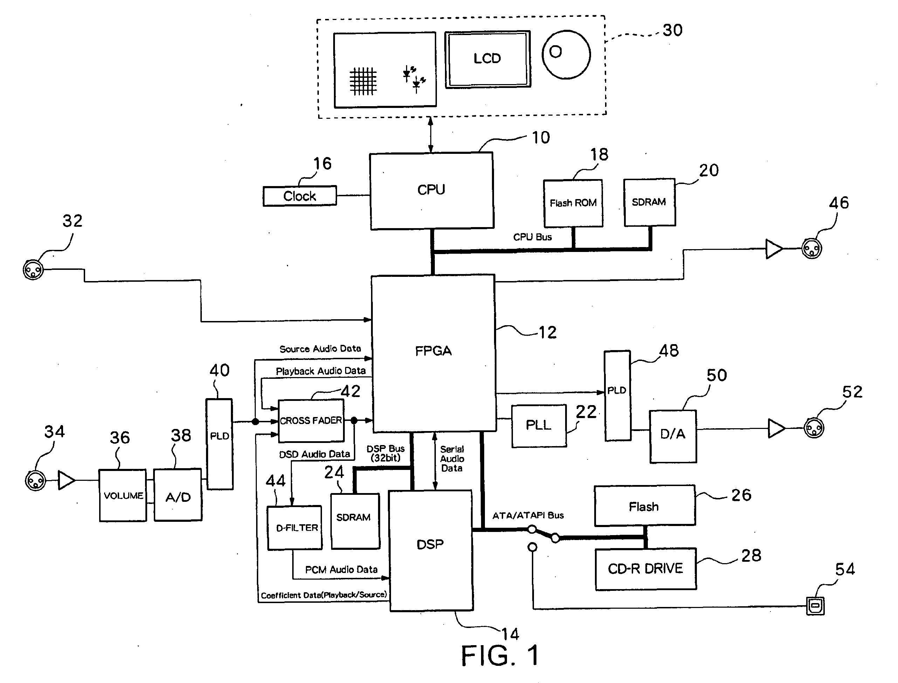

FIG. 1 shows the configuration of the digital master recorder of the embodiment. The digital master recorder has external input terminals, such as an analogue input terminal and a digital input terminal; and records an audio signal fed from the external input terminal into a write-once optical disk, such as a CD-R and a DVD-R. Further, the digital master recorder incorporates flash memory, and audio data can be recorded in the flash memory, as well. Audio data read from flash memory can also be recorded in the write-once optical disk.

The digital master recorder has a CPU 10, an FPGA (Field Programmable Gate Array: a programmable LSI) 12, and a DSP 14. The recorder also has flash memory 26 and a CD-R drive 28. The CD-R drive 28 may also be a CD/DVD-R drive or a drive capable of recording data in a rewritable optical disk, such as a CD-RW and a DVD-RW. Processing of the present embodiment is one performed when data are recorded in a write-once optical disk.

The CPU 10 operates in accordance with a clock signal from a clock 16 and performs various types of processing operations in accordance with a command from a user interface block 30. A processing program for the CPU 10 is stored in flash ROM 18, and processed data from the CPU are stored in SDRAM 20 acting as work memory. The user interface block 30 has various keys, a display LED for visually ascertaining operating conditions, an LCD, and a rotary encoder. The rotary encoder is used for volume control, menu selection, and the like. The user interface block 30 is provided on a front panel of the digital master recorder.

The FPGA 12 is supplied with a digital audio signal from a digital input terminal 32, and an analogue input terminal 34 supplies an analogue audio signal by way of a volume 36, an A-D converter 38, and a PLD (Programmable Logic Device) 40. The FPGA 12 operates in accordance with a clock signal from a PLL 22, and outputs a processing result to a digital output terminal 46 or to an analogue output terminal 52 by way of a PLD 48 and a D-A converter 50 by means of serially exchanging audio data with the DSP 14.

The DSP 14 performs processing for converting a data format of an audio file, such as conversion of DSD audio data into PCM audio data. The DSP 14 subjects other audio signals to various effect processing and supplies the thus-processed signals to the FPGA 12. A fader 42 and a D-filter 44 are also used for various processing. The D-filter 44 is used for generating meter display data or at the time of conversion of DSD audio data into PCM audio data.

A USB terminal 54 is provided on a rear panel of the digital master recorder and connected to a personal computer.

In such a configuration, when the user selects recording of specific audio data; for example, MP3 audio data, into a CD-R by use of a function key of the user interface block 30 or the rotary encoder, the CPU 10, the FPGA 12, and the DSP 14 supply MP3 data to the CD-R drive 28, where the data are written into the CD-R. Write processing is usually performed by the CD-R drive 28 as follows.

### <Normal Writing>

(1) An area for an FAT is reserved in the first track of a CD-R.
(2) Write an MP3 file from the second track of the CD-R.
(3) Prepare an FAT of a written file after completion of recording operation and write the thus-prepared FAT into the first track.
(4) Write a lead-out area at the end of a user data recording area and a lead-in area at the beginning of the same, and close the session.

However, when power shutdown, or the like, has arisen during the course of writing of the MP3 file, the file cannot be reproduced, because the FAT is not written into the first track. Accordingly, the following method is conceivable as a recovery method for the case of occurrence of power shutdown. For instance, imagine a case where power shutdown has arisen in the middle of recording of an MP file in the third track.

### <First Recovery Method for Power Shutdown>

(1) Reserve an area for an FAT in the first track of a CD-R.
(2) Write an MP3 file from the second track of the CD-R.
(3) Shut off power in the middle of writing of the file into the third track.
(4) Since a record end block in the third track does not become a link block, the track is determined to be a damaged track.
(5) The third track is closed and brought into a reproducible state.
(6) Reproduce all of the data in the third track. When an MP3 header is found, an FAT having a file length equal to a distance to an area where the MP3 header is written is created on the assumption that the data are an MP3 file.
(7) Write the thus-created FAT into the first track.
(8) Write a lead-out area at the end of a user data recording area and a lead-in area at the beginning of the same, and close the session.

As mentioned above, so long as the MP3 header is found, an FAT having a file length equal to a distance up to an area where the MP3 header is written is created on the assumption that the data are an MP3 file, and the thus-created FAT is written into the first track, so that an area where information about the FAT is present can be subjected to playback. However, under such a recovery method, the data are reproduced as a file having an unknown filename, an unknown extension, and an unknown name of a destination folder (hereinafter called a "destination folder name"), which creates inconvenience.

Accordingly, even when power shutdown, or the like, arises during recording of the MP3 file, there is performed, in the present embodiment, a method that enables recovery of information, such as a file name, an extension, and a destination folder name. Specifically, prior to writing the MP3 file, the CPU 10 writes recovery data including a filename and an extension of the file, and a destination folder name. The recovery data are written before writing of the MP3 file. Therefore, even when power shutdown, or the like, has arisen in the middle of writing of the MP3 file, a filename and an extension of the MP3 file and a destination folder name can be recovered by reference to the recovery data. Amounts of recovery data are arbitrary. However, in the case of a CD-R, an access is made on a per-sector (2048 bytes) basis. Hence, the amount of data is preferably set to an integral multiple of 2048 bytes. Thus, a pointer on the FAT can be taken as a starting block of the MP3 file by means of setting the number of bytes of the recovery data to an integral multiple of sector bytes. Since the recovery data are written into a head of the MP3 file, the data can also act as a file header when a plurality of files are present in one track in a split manner. Although MP3 headers are inserted at predetermined intervals to the MP3 file, the recovery data can also act, as opposed to the MP3 headers, as headers for identifying heads of the plurality of files. The recovery method of the present embodiment is as follows. Imagine a case where power shutdown has arisen in the middle of recording of the MP3 file in the third track.

### <Second Recovery Method Employed at the Time of Power Shutdown>

(1) Reserve an area for an FAT in the first track of a CD-R.
(2) Write recovery data into the second track of the CD-R.
(3) Successively write an MP3 file into the recovery data.
(4) In subsequent operation, first write recovery data in the same manner, and an MP3 file is then written.
(5) Shut off power in the middle of writing of a file into the third track.
(6) Since a recording end block of the third track does not become a link block, the track is determined to be a damaged track.
(7) The end of the third track is taken as runout and a link block, and the track is closed and brought into a readable state.
(8) The entirety of the track is reproduced, and an FAT is created by use of a file name, an extension, and a destination folder name, which are included in the recovery data, and the thus-created FAT is written into the first track.
(9) A lead-out area is written into the end of a user data recording area, and a lead-in area is written into the beginning of the user data recording area, and a session is closed.

As mentioned above, information about the MP3 file of interest, such as a filename and an extension of the file, can be acquired by reproducing the recovery data, and hence an FAT including the information can be created. The pointer on the FAT is set in the first block of the MP3 file rather than in the recovery data, whereby the MP3 file is recognized as a file not including the recovery data when an access is made to the file by means of a personal computer, or the like. In the present embodiment, a so-called TOC is also included in the FAT.

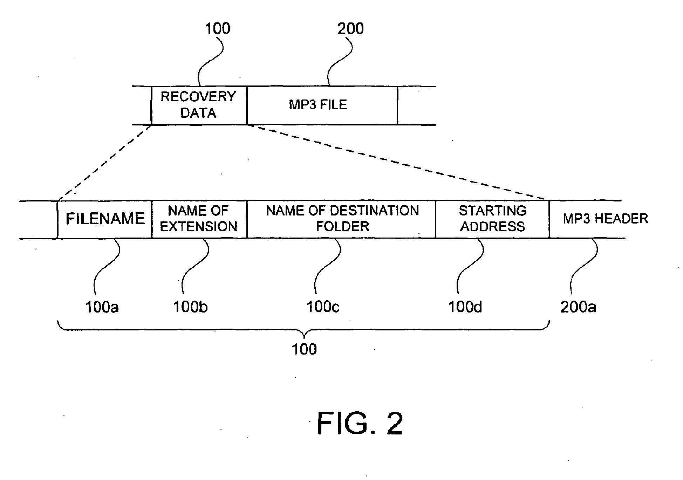

FIG. 2 shows a format of the present embodiment. The recovery data 100 are written prior to writing of an MP3 file 200. The recovery data include a filename 100a, an extension 100b, a destination folder name 100c, and a starting address 100d of the MP3 file 200. A volume label, and the like, may also be included in the recovery data. Although the recovery data are written into the head of the MP3 file, the data differ from the MP3 headers 200a inserted at given intervals into the MP3 file. In the drawing, the recovery data 100 and the MP3 headers are illustrated as distinguished from each other. The recovery data 100 can also be said to be written into a location immediately before the MP3 header 200a of the MP3 data 200.

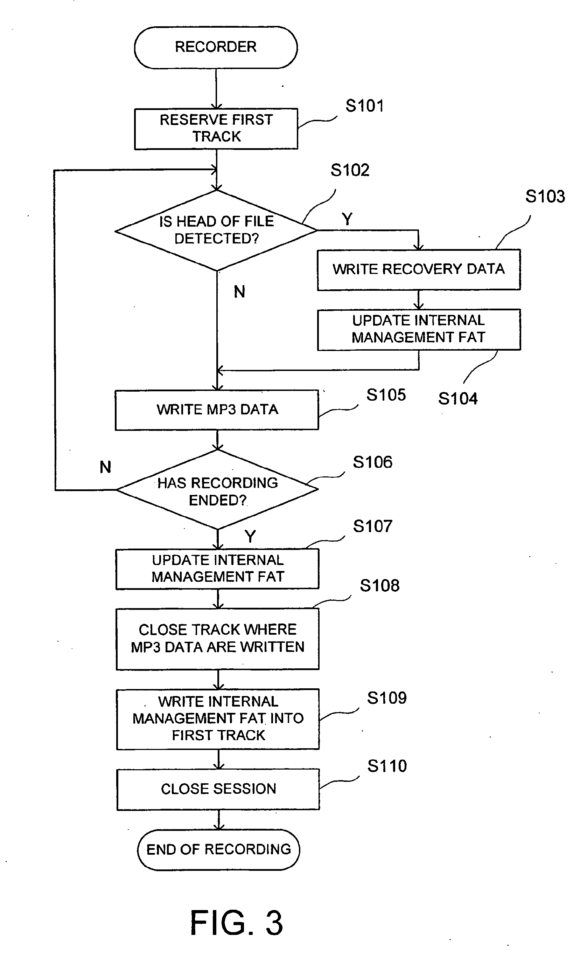

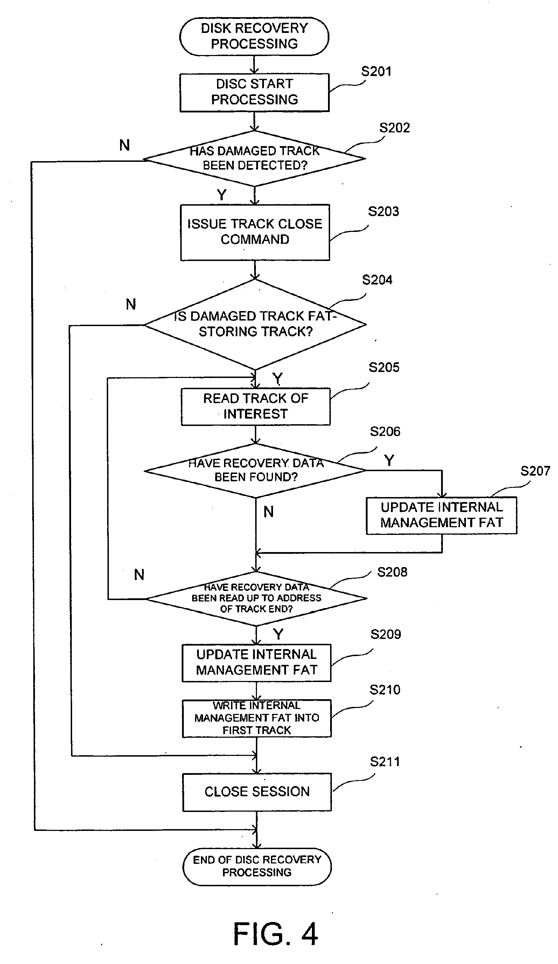

FIGs. 3 and 4 show flowcharts of processing of the present embodiment. FIG. 3 shows processing performed at the time of recording of the MP3 file, and FIG. 4 shows processing performed at the time of recovery operation.

In processing shown in FIG. 3, when an MP3 file is first recorded in a CD-R, a first track is reserved as an area for an FAT (S101), and a determination is made as to whether or not a head of the MP3 file is detected (S102). When a certain MP3 file is written while being split into a plurality of files, heads of respective split files are also detected. When there is a head of the MP3 file, recovery data including a filename and an extension of the MP3 file are written (S103). An FAT managed by the internal memory of the CPU 10 is updated (S104). After writing of the recovery data, the MP3 file is written (S105). A determination is made as to whether or not recording of all of the MP3 files has ended (S106). Processing pertaining to S101 to S105 is iterated until completion of recording operation. As a result, the recovery data are written into the heads of all of the MP3 files.

After completion of recording of all of the MP3 files (S106), a data length of the file is determined, and hence the CPU 10 finally updates the FAT managed by the internal memory (S107), and the track where the MP3 files are written is closed (S108), and an internal management FAT is written into the first track of the CD-R (S109). The lead-out and lead-in areas are written, and the session is closed (S110). Through above processing operations, recording is normally completed.

In the meantime, when power shutdown arises in the middle of writing of the MP3 file, recording is not determined to be completed in S106; the track is not closed in S108; and the FAT is also not written in S109. Accordingly, at the time of recovery of a disk, a damaged track is closed, and processing pertaining to S109 is performed through use of the recovery data written in S103, thereby creating an FAT.

Inprocessing shown in FIG. 4, a disk is first started (S201), and a determination is made as to whether or not the track is a damaged track (S202). When a link block is not present in the end of the track and when the track is determined to be a damaged track, the CPU 10 issues a track close command, to thus first close the damaged track and makes the track readable (S203). Next, it is checked whether the damaged track is not an FAT-storing track; namely, the first track (S204). When the damaged track is not the FAT-storing track (the first track), the entirety of the track is subjected to reading (S205), thereby detecting the recovery data (S206). When the recovery data are detected, the CPU 10 updates the FAT managed by the internal memory through use of the recovery data (S207). Processing pertaining to S205 to S207 is repeatedly performed until a track end address of the damaged track. When power shutdown arose in the middle of recording of the MP3 file in the third track, the recovery data of the second track and the recovery data of the third track are sequentially read, and the FAT is sequentially updated by use of these sets of recovery data. After the recovery data have been read up to the address of a track end (S208), a data length is determined. Hence, the internal management FAT is finally updated (S209), and the internal management FAT is written into the first track (S210). The lead-out area and the lead-in area are written, and the session is closed (S211).

When NO is selected in S205; namely, when the damaged track is determined to be an FAT-storing track, there is a possibility that the file cannot be recovered. Hence, the session is simply closed without creating an FAT by use of the recovery data.

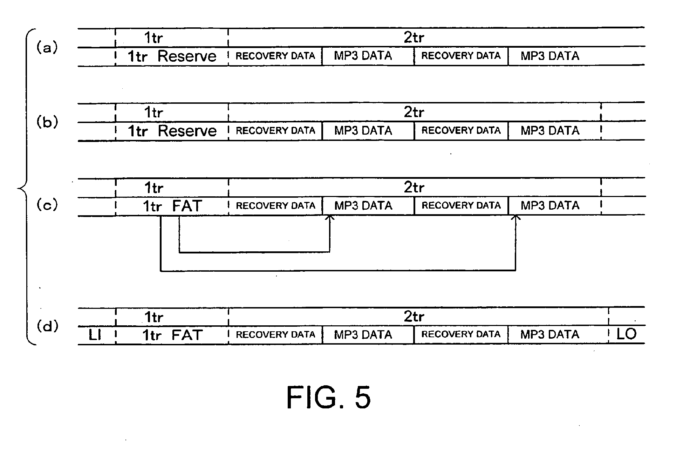

FIG. 5 schematically shows disk recovery processing. FIG. 5(a) shows a data format achieved during recording of the MP3 file; namely, a state where the first track (1tr) is reserved, where first recovery data are written into the head of the second track (2tr), where a first MP3 file is successively written, where second recovery data are successively written, and where a second MP3 file is successively written. The first recovery data include a filename and an extension of the first MP3 file, and the second recovery data include a filename and an extension of the second MP3 file. The format provided herein is one achieved when a plurality of MP3 files are present in one track, and the recovery data can act also as a file header. As a matter of course, even when one MP3 file is allocated to one track, recovery data are recorded in the same manner, and the data can act in the same fashion. Fig. 5 (b) shows a data format when power shutdown arose during recording of the second MP3 file. Since power shutdown has arisen in the middle of recording operation, an FAT is not present in the first track. FIG. 5(c) shows a state where an FAT is created by reading the first recovery data and the second recovery data and where the thus-created FAT is written into the first track. Both the first recovery data and the second recovery data are an integral multiple of 2048 bytes (e.g., 2048 bytes), a pointer (a starting address) on the FAT shows a starting address of the first MP3 file and a starting address of the second MP3 file. FIG. 5(d) shows a state where, after writing of the FAT, a lead-in (LI) area is written into the head of the track and a lead-out (LO) area is written in the end of the track, thereby closing the session.

As mentioned above, the MP3 data are written by means of first writing recovery data in the present embodiment. Hence, even when power shutdown arose in the middle of recording of the MP3 file, the file information, such as a filename and an extension of the MP3 file, can be readily recovered by use of the recovery data. Moreover, the recovery data are written into the head of the file, and hence the present invention can be applied without regard to the format of the file.

In the present embodiment, when an MP3 file is recorded, recovery data are written into the head of the MP3 file at all times. However, the user may also be provided the option of whether to write recovery data. Alternatively, the option of whether to write recovery data may also be automatically switched according to a data length of a file to be recorded. For example, the data length of a file to be recorded is compared with a predetermined value (e.g., a reference data length). When the data length is equal to or less than a predetermined value, the possibility of occurrence of power shutdown in the middle of recording operation is determined to be low, because recording operation ends within a short period of time, and recovery data are not written. In the meantime, when the data length of a file to be recorded exceeds a predetermined value, recording involves consumption of much time. Hence, there is a possibility that power shutdown will arise in the middle of recording operation, and writing of recovery data is performed.

## Claims

1. An optical disk drive comprising:
a unit for reserving an FAT area in a write-once optical disc before initiation of recording of data in the write-once optical disc;
a unit for recording recovery data;
a unit for recording data in the write-once optical disk after recording the recovery data forming a head of the data;
a unit for detecting that the recording is interrupted before completion of recording of the data;
a unit for closing a track *by writing a link block* at an address where the recording operation has been interrupted when interruption is detected, said address being the address of an end of the track; and
a unit that reads the recovery data recorded in the head of the data, creates an FAT based on the recovery data and the address of the end of the track, and records the FAT into the FAT area when interruption is detected.

2. The optical disk drive according to claim 1, wherein the recovery data include at least any of a filename and an extension of a data file to be recorded.

3. The optical disk drive according to claim 1, wherein the recovery data includes at least a filename, an extension, a destination folder name, and a starting address of a data file to be recorded.

4. The optical disk drive according to claim 1, wherein the recovery data has a length that is an integral multiple of 2048 bytes.

5. The optical disk drive according to claim 1, wherein the recovery data have a length that is an integral multiple of amounts cf data in one sector of the write-once optical disk.

6. The optical disk drive according to claim 1, wherein a header is recorded in a head of data to be recorded into the write-once optical disk; and the recovery data are recorded in a location immediately before the header.

7. The optical disk drive according to claim 1, wherein data to be recorded in the write-once optical disk are MP3 data, and the recovery data are recorded in a location immediately before a header of the MP3 data.

8. The optical disk drive according to claim 1, further comprising:
a unit for comparing a data length of the data to be recorded with a reference data length, wherein
the unit for recording the recovery data records the recovery data when a data length of the data to be recorded exceeds the reference data length, and, when the data length of the data to be recorded is equal to or less than the reference data length, the unit does not record the recovery data.

9. The optical disk drive according to claim 1, wherein
the optical dick drive is configured to reserve the FAT area in a first track of a write-once optical disk.

10. The optical disk drive according to claim 1, wherein the optical dick drive is configured to record the recovery data in a second track and subsequent tracks of the write-ounce optical disk.

11. The optical disk drive according to claim 1, wherein further comprising
a unit for determining whether or not the interrupted track is a first track.

## Patentansprüche

1. Optisches Datenspeicherlaufwerk, das umfasst:
eine Einheit zum Reservieren eines FAT Gebiets auf einem einmal beschreibbaren optischen Datenspeicher vor dem Initialisieren des Speicherns von Daten auf dem einmal beschreibbaren optischen Datenspeicher;
eine Einheit zum Speichern von Wiederherstellungsdaten;
eine Einheit zum Speichern von Daten auf dem einmal beschreibbaren optischen Datenspeicher nach dem Speichern der Wiederherstellungsdaten, die einen Datenkopf bilden,
eine Einheit zum Detektieren, dass das Speichern vor Fertigstellung des Speicherns der Daten unterbrochen wird;
eine Einheit zum Schließen einer Spur durch Schreiben eines Verbindungsblocks bei einer Adresse, an der die Speicheroperation unterbrochen wurde, sofern eine Unterbrechung detektiert wird, wobei die Adresse eine Adresse von einem Ende der Spur ist; und
eine Einheit, die die im Datenkopf aufgenommenen Wiederherstellungsdaten liest,
die basierend auf den Wiederherstellungsdaten und der Adresse am Ende der Spur einen FAT erzeugt und die den FAT in das FAT Gebiet speichert, sofern eine Unterbrechung detektiert wird.

2. Optisches Datenspeicherlaufwerk nach Anspruch 1, wobei die Wiederherstellungsdaten mindestens Dateiname und/oder Erweiterung der zu speichernden Datei umfasst.

3. Optisches Datenspeicherlaufwerk nach Anspruch 1, wobei die Wiederherstellungsdaten mindestens einen Dateinamen, eine Erweiterung, einen Zielordnernamen und eine Startadresse einer zu speichernden Datei umfassen.

4. Optisches Datenspeicherlaufwerk nach Anspruch 1, wobei die Wiederherstellungsdaten eine Länge aufweisen, die ein ganzzahliges Vielfaches von 2048 Bytes ist.

5. Optisches Datenspeicherlaufwerk nach Anspruch 1, wobei die Wiederherstellungsdaten eine Länge aufweisen, die ein ganzzahliges Vielfaches der Anzahl an Daten in einem Sektor des einmal beschreibbaren optischen Datenspeichers ist.

6. Optisches Datenspeicherlaufwerk nach Anspruch 1, wobei ein Header in einem auf dem einmal beschreibbaren optischen Datenspeicher zu speichernden Datenkopf gespeichert wird und wobei die Wiederherstellungsdaten an einem Ort unmittelbar vor dem Header gespeichert werden.

7. Optisches Datenspeicherlaufwerk nach Anspruch 1, wobei die auf dem einmal beschreibbaren Datenspeicher zu speichernden Daten MP3 Daten sind und wobei die Wiederherstellungsdaten an einem Ort unmittelbar vor dem Header der MP3 Datei gespeichert werden.

8. Optisches Datenspeicherlaufwerk nach Anspruch 1, das ferner umfasst:
eine Einheit zum Vergleichen einer Datenlänge der zu speichernden Daten mit einer Referenzdatenlänge, wobei
die Einheit zum Speichern der Wiederherstellungsdaten die Wiederherstellungsdaten speichert, wenn eine Datenlänge der zu speichernden Daten die Referenzdatenlänge übertrifft, und die Einheit die Wiederherstellungsdaten nicht speichert, wenn die Datenlänge der zu speichernden Daten gleich oder kleiner als die Referenzdatenlänge ist.

9. Optisches Datenspeicherlaufwerk nach Anspruch 1, wobei das optische Datenspeicherlaufwerk darauf ausgelegt ist, das FAT Gebiet in einer ersten Spur des einmal beschreibbaren optischen Datenspeichers zu reservieren.

10. Optisches Datenspeicherlaufwerk nach Anspruch 1, wobei das optische Datenspeicherlaufwerk darauf ausgelegt ist, die Wiederherstellungsdaten in einer zweiten Spur und den folgenden Spuren des einmal beschreibbaren optischen Datenspeichers zu speichern.

11. Optisches Datenspeicherlaufwerk nach Anspruch 1, das ferner umfasst eine Einheit zum Bestimmen, ob die unterbrochene Spur eine erste Spur ist oder nicht.

## Revendications

1. Unité de disque optique comprenant :
une unité pour réserver une région de FAT dans un disque optique inscriptible une seule fois avant le commencement de l'enregistrement de données dans le disque optique inscriptible une seule fois ;
une unité pour enregistrer des données de récupération ;
une unité pour enregistrer des données dans le disque optique inscriptible une seule fois après avoir enregistré les données de récupération formant une tête des données ;
une unité pour détecter que l'enregistrement est interrompu avant l'achèvement de l'enregistrement des données ;
une unité pour fermer une piste en écrivant un bloc de liaison à une adresse où l'opération d'enregistrement a été interrompue lorsque l'interruption est détectée, ladite adresse étant l'adresse d'une extrémité de la piste et
une unité qui lit les données de récupération enregistrées dans la tête des données, crée un FAT basé sur les données de récupération et l'adresse de l'extrémité de la piste et qui enregistre le FAT dans la région de FAT lorsque l'interruption est détectée.

2. Unité de disque optique selon la revendication 1 dans laquelle les données de récupération comprennent au moins l'un des éléments nom de fichier et extension d'un fichier de données à enregistrer.

3. Unité de disque optique selon la revendication 1 dans laquelle les données de récupération comprennent au moins un nom de fichier, une extension, un nom de dossier de destination et une adresse de départ d'un fichier de données à enregistrer.

4. Unité de disque optique selon la revendication 1 dans laquelle les données de récupération ont une longueur qui est un multiple entier de 2048 bytes.

5. Unité de disque optique selon la revendication 1 dans laquelle les données de récupération ont une longueur qui est un multiple entier de quantités de données dans un secteur du disque optique inscriptible une seule fois.

6. Unité de disque optique selon la revendication 1 dans laquelle un en-tête est enregistré dans une tête de données à enregistrer dans le disque optique inscriptible une seule fois et les données de récupération sont enregistrées dans un endroit immédiatement avant l'en-tête.

7. Unité de disque optique selon la revendication 1 dans laquelle des données à enregistrer dans le disque optique inscriptible une seule fois sont des données MP3 et les données de récupération sont enregistrées dans un endroit immédiatement avant un en-tête des données MP3.

8. Unité de disque optique selon la revendication 1 comprenant de plus :
une unité pour comparer une longueur des données à enregistrer avec une longueur de données de référence dans laquelle l'unité pour enregistrer les données de récupération enregistre les données de récupération lorsqu'une longueur de données des données à enregistrer dépasse la longueur de données de référence et, lorsque la longueur de données des données à enregistrer est égale ou inférieure à la longueur de données de référence, l'unité n'enregistre pas les données de récupération.

9. Unité de disque optique selon la revendication 1 dans laquelle l'unité de disque optique est configurée pour réserver la région de FAT dans une première piste d'un disque optique inscriptible une seule fois.

10. Unité de disque optique selon la revendication 1 dans laquelle l'unité de disque optique est configurée pour enregistrer les données de récupération dans une seconde piste et des pistes consécutives du disque optique inscriptible une seule fois.

11. Unité de disque optique selon la revendication 1 comprenant de plus une unité pour déterminer si la piste interrompue est une première piste ou non.
